# EUROPÄISCHE PATENTANMELDUNG

(11) **EP 2 439 358 A2**
(43) Veröffentlichungstag der Anmeldung: **11.04.2012**
(21) Anmeldenummer: 11008133.8
(22) Anmeldetag: 07.10.2011
(51) Int. Cl.: E04G 21/24

(54) **Verkleidungsvorrichtung**

(30) Priorität: 11.10.2010 DE 202010014172 U
(71) Anmelder: Odendahl + Feldbusch GmbH, 50769 Köln (DE)
(72) Erfinder: Odendahl, Uwe, 50768 Köln (DE)
(74) Vertreter: Schiffer, Axel Martin

(57) **Zusammenfassung**

Verkleidungsvorrichtung zum Verkleiden eines Gerüstes oder einer Fassade mit einem flächigen, flexiblen Träger, welcher zum Verkleiden des Gerüstes oder der Fassade vor dem Gerüst oder der Fassade anordenbar ist, und mit einer Befestigungseinrichtung zum lösbaren Befestigen des Trägers an dem Gerüst oder der Fassade, wobei zum Erzeugen von elektrischer Energie mindestens ein Solarpanel mit einer Mehrzahl von Solarzellen an dem Träger angebracht ist, der Träger zum mechanischen Stabilisieren und räumlichen Positionieren des Solarpanels eingerichtet ist und der Träger zum Aufnehmen von mechanischen Kräften, welche in einem Montagezustand in das Solarpanel eingetragen werden, insbesondere von Windkräften, und zum Einleiten dieser Kräfte in das Gerüst oder die Fassade eingerichtet ist.

## Beschreibung

Die Erfindung betrifft eine Verkleidungsvorrichtung zum Verkleiden eines Gerüstes oder einer Fassade nach dem Oberbegriff des Anspruchs 1.

Eine gattungsgemäße Verkleidungsvorrichtung umfasst einen flächigen, flexiblen Träger, welcher zum Verkleiden des Gerüstes oder der Fassade vor dem Gerüst oder der Fassade anordenbar ist, und eine Befestigungseinrichtung zum lösbaren Befestigen des Trägers an dem Gerüst oder der Fassade.

Verkleidungsvorrichtungen der genannten Art können beispielsweise als großflächige Schutzeinrichtungen oder als Werbe- oder Informationsposter vor einer vertikalen Gebäudefassade oder an einem eigens hierfür bereitgestellten Trägergerüst aufgehängt werden.

Als eine **Aufgabe** der Erfindung kann angesehen werden, die bekannte Verkleidungsvorrichtung derart weiterzubilden, dass diese vielfältiger nutzbar ist.

Die Aufgabe wird erfindungsgemäß durch eine Verkleidungsvorrichtung mit den Merkmalen des Anspruchs 1 gelöst. Bevorzugte Ausgestaltungen und Weiterbildungen der Erfindung sind in den abhängigen Ansprüchen angegeben.

Die Verkleidungsvorrichtung der oben genannten Art ist erfindungsgemäß dadurch weitergebildet, dass zum Erzeugen von elektrischer Energie mindestens ein Solarpanel mit einer Mehrzahl von Solarzellen an dem Träger angebracht ist, dass der Träger zum mechanischen Stabilisieren und räumlichen Positionieren des Solarpanels eingerichtet ist und dass der Träger zum Aufnehmen von mechanischen Kräften, welche in einem Montagezustand in das Solarpanel eingetragen werden, insbesondere von Windkräften, und zum Einleiten dieser Kräfte in das Gerüst oder die Fassade eingerichtet ist.

Erfindungsgemäß wurde erkannt, dass an vertikalen Flächen, insbesondere an Gebäudefassaden, eine erhebliche Einstrahlung von Sonnenenergie vorhanden ist.

Ein Grundgedanke der Erfindung besteht darin, die Verkleidungsvorrichtung nicht allein zu Schutz-, Informations- oder Werbezwecken, sondern zusätzlich zur Erzeugung von elektrischer Energie einzusetzen. Durch die Nutzung der Sonnenenergie zur Stromerzeugung ist die erfindungsgemäße Verkleidungsvorrichtung besonders umweltfreundlich.

Bei dem Solarpanel handelt es sich insbesondere um eine photovoltaische Solaranlage zur Erzeugung von elektrischer Energie. Das Solarpanel, welches auch als Solarmodul oder Photovoltaikmodul bezeichnet werden kann, weist hierzu in grundsätzlich bekannter Weise Strukturen zur Umwandlung von Sonnenenergie in elektrische Energie auf.

Insbesondere bei großflächigen Verkleidungsvorrichtungen, wie sie beispielsweise vor oder an Gebäudefassaden realisiert werden können, kann eine wirtschaftliche solartechnische Stromerzeugung erzielt werden.

Bei der Befestigungseinrichtung kann es sich beispielsweise um Ösen oder Befestigungslaschen am Rand des Trägers handeln. Die Befestigungseinrichtung kann auch Tragseile, Tragriemen und andere Befestigungsmittel aufweisen. Die Befestigungseinrichtung ist dazu ausgerichtet, den Träger temporär an der Gebäudefassade oder dem Gerüst zu befestigen.

Der flexible Träger lässt sich zu Transportzwecken einrollen oder falten. Die Verkleidungsvorrichtung kann somit einfach und platzsparend transportiert werden. Ferner kann der flexible Träger einfach an gegebene Konturen, beispielsweise eine gebogene Fassade, angepasst werden.

In einer vorteilhaften Ausgestaltung ist der Träger ein Netz, insbesondere ein Schutznetz, ein Gewebe, eine Folie oder eine Leinwand. Der Träger übernimmt im Wesentlichen statische und/oder mechanische Funktionen und dient überwiegend als Stabilisierungselement für das Solarpanel. Das Solarpanel selbst ist vorzugsweise leicht und gewichtsoptimiert ausgeführt und nicht dazu ausgelegt, die gegebenenfalls auftretenden beträchtlichen Kräfte und Lasten aufzunehmen und abzuleiten.

Bei dem Träger handelt es sich daher vorzugsweise um eine stabile und robuste Tragvorrichtung, wie beispielsweise ein robustes Gewebe, ein Trag- oder Schutznetz oder eine Schutzmatte, welche das vergleichsweise fragile Solarpanel stabilisiert. Zur Erhöhung der Stabilität kann der Träger Stabilisierungsseile aufweisen, welche beispielsweise als verstärkte Seile einen Teil des Gewebes oder Netzes bilden oder an denen die Folie oder Leinwand befestigt ist.

Grundsätzlich kann es sich bei dem Träger auch um eine Dach- oder Abdichtplane handeln. Die Verkleidungsvorrichtung kann demnach zusätzlich zu ihrer Schutz-und/oder Werbefunktion auch eine Dichtfunktion haben.

Der Träger weist vorzugsweise einen Kunststoff, insbesondere ein Polyester- oder Vinylmaterial, auf. Dieses zeichnet sich durch robuste Eigenschaften und ein geringes Gewicht aus. Der Träger kann insbesondere ein Vinylnetz oder eine Vinylplane sein.

Eine besonders flexible und robuste Verkleidungsvorrichtung wird dadurch erzielt, dass nicht nur der Träger, sondern auch das Solarpanel mit den Solarzellen flexibel ist. Durch die Kombination des biegsamen Trägers mit einem biegsamen Solarpanel wird zudem eine gut zu transportierende Verkleidungsvorrichtung erhalten. Insbesondere kann die Verkleidungsvorrichtung zusammen mit dem Solarpanel zu Transportzwecken eingerollt und/oder gefaltet werden, ohne dass es im Regelfall zu einer Beschädigung der Solarzellen führt.

Die Solarzellen des Solarpanels können in den Träger integriert sein. Dies kann beispielsweise dadurch erfolgen, dass die Solarzellen in den Träger eingewebt oder mit diesem auf andere Weise, beispielsweise durch Verkleben oder Verschweißen, weitestgehend fest verbunden sind. Das Solarpanel kann integraler Bestandteil des Trägers sein, so dass das Solarpanel nicht mit einfachen Mitteln von dem Träger trennbar ist.

In einer bevorzugten Ausgestaltung der Erfindung ist das Solarpanel lösbar an dem Träger befestigt. Hierdurch kann das Solarpanel flexibel ausgetauscht und an bestehende Gegebenheiten angepasst werden. Damit ist das Solarpanel insbesondere für einen temporären Einsatz geeignet. Zum Befestigen des Solarpanels an dem Träger sind Verbindungseinrichtungen vorgesehen. Das Solarpanel kann beispielsweise an den Träger angenäht oder über Kabelbinder, Druckknöpfe, Rast- oder Steckverbindugnen an dem Träger befestigt sein.

In einer besonders bevorzugten Ausgestaltung der Erfindung weist die Verkleidungsvorrichtung eine Informations- oder Werbefläche zum Anzeigen einer Information, eines Werbetextes und/oder einer Werbegraphik auf. Die Verkleidungsvorrichtung kann somit auch als Werbeträger bezeichnet werden. Großflächige Verkleidungsvorrichtungen mit Informations- oder Werbeflächen werden meist ausreichend weit entfernt von abschattenden Hindernissen, wie beispielsweise anderen Gebäuden, angeordnet, um gut sichtbar zu sein. Die Nutzung einer solchen Informations- oder Werbefläche zusätzlich als Photovoltaikkollektor oder Photovoltaikanlage ist daher besonders günstig.

Eine verbesserte Umwandlung des Sonnenlichts in elektrische Energie und insbesondere ein verbesserter Wirkungsgrad kann erzielt werden, wenn Oberflächen der Solarzellen gegenüber einer Fläche des Trägers, insbesondere der Informations- und Werbefläche, geneigt sind. Da die Verkleidungsvorrichtung zumeist in vertikaler Ausrichtung angebracht ist, kann durch eine Verkippung der wirksamen Oberflächen der Solarzellen der Einfallswinkel der Sonnenstrahlen auf die Solarzellen verbessert werden. In einer Montagestellung des Werbeträgers sind die wirksamen Oberflächen der Solarzellen vorteilhafterweise nach oben verkippt. Insbesondere kann eine wirksame Fläche des Solarpanels durch eine Art terrassen- oder stufenförmige Anordnung der Solarzellen vergrößert werden.

Eine weitere Verbesserung des Wirkungsgrads kann dadurch erreicht werden, dass das Solarpanel in einem ersten Bereich des Trägers vorgesehen ist, dessen Oberfläche gegenüber der Oberfläche eines zweiten Bereichs des Trägers geneigt ist.

Das Solarpanel kann insbesondere in einem ersten, oberen Bereich des Trägers vorgesehen sein, welcher in der Montagestellung der Verkleidungsvorrichtung nach oben, also in Richtung des Sonnenlichts gerichtet ist. Die Informations- oder Werbefläche kann insbesondere in einem zweiten, unteren Bereich des Trägers vorgesehen sein. Der untere Bereich kann insbesondere vertikal ausgerichtet und/oder nach unten gerichtet sein. Damit ist das Solarpanel dem Sonnenlicht und die Informations- oder Werbefläche einem am Boden stehenden Betrachter der Verkleidungsvorrichtung beziehungsweise des Werbeträgers zugewandt.

Besonders bevorzugt ist es, wenn der Träger mindestens zwei Flächen aufweist, die zueinander geneigt sind, und das Solarpanel an einer ersten Fläche und die Informations- oder Werbefläche an einer zweiten Fläche des Trägers angeordnet ist. In einer bevorzugten Ausgestaltung sind die Flächen ebene Flächen. Die Flächen sind in einem Winkel zueinander angeordnet. Das Solarpanel ist an der ersten ebenen Fläche und die Informations- oder Werbefläche an der hierzu abgewinkelten zweiten ebenen Fläche angeordnet.

Eine weitere bevorzugte Ausgestaltung besteht darin, dass der Träger gewölbt ist. Dabei kann eine äußere Oberfläche des Trägers insbesondere nach außen gewölbt sein. Als äußere Oberfläche des Trägers wird hierbei insbesondere diejenige Oberfläche verstanden, welche der Fassade oder dem Gerüst abgewandt ist und/oder an welcher die Informations- oder Werbefläche vorgesehen ist. Bei der Wölbung des Trägermaterials handelt es sich insbesondere um eine eindimensionale Wölbung.

Insbesondere im Zusammenhang mit der Informations- oder Werbefläche ist es bevorzugt, dass das Solarpanel zumindest teilweise transparent ist. Das Solarpanel kann aus der Sicht eines Betrachters der Informations- oder Werbefläche vor der entsprechenden Information, dem Werbetext oder der Werbegrafik angeordnet sein. Aufgrund der Transparenz des Solarpanels ist die Information, der Werbetext oder die Werbegrafik durch das Solarpanel hindurch sichtbar. Die Verkleidungsvorrichtung kann demnach gleichzeitig sowohl zum Anzeigen einer Information, eines Werbetextes und/oder einer Werbegrafik als auch zur Erzeugung von elektrischer Energie genutzt werden.

In einer vorteilhaften Ausgestaltung kann der Träger zumindest teilweise transparent sein, so dass mithilfe einer hinter dem Träger beziehungsweise der Werbefläche angeordneten Beleuchtung ansprechende optische Effekte erreicht werden können.

Insbesondere in diesem Zusammenhang besteht eine weitere bevorzugte Weiterbildung der Erfindung darin, dass eine Beleuchtungseinrichtung zum Be- oder Hinterleuchten des Trägers oder der Werbefläche vorhanden ist, welche zur Energieversorgung mit dem Solarpanel gekoppelt ist. Der von dem Solarpanel erzeugte elektrische Strom beziehungsweise die elektrische Energie kann somit direkt an der Informations- oder Verkleidungsvorrichtung beziehungsweise der Werbefläche nutzbar gemacht werden.

In einer weiteren bevorzugten Ausgestaltung weisen die einzelnen Solarzellen unterschiedliche Farben auf. Durch solche eingefärbten Solarzellen ist es beispielsweise möglich, eine Information, einen Werbetext und/oder eine Werbegrafik durch die Solarzellen selbst bereitzustellen. Die Solarzellen können damit sowohl zu Informations-oder Werbezwecken als auch zur solartechnischen Erzeugung elektrischer Energie verwendet werden.

Eine weitere vorteilhafte Weiterbildung besteht darin, dass ein Videoboard oder allgemein eine Videoeinrichtung zum Anzeigen von bewegten oder unbewegten Bildern vorhanden ist. Mit dem Videoboard kann eine selbstleuchtende Werbeinformation bereitgestellt werden. Das Videoboard beziehungsweise die Videoeinrichtung kann zur Energieversorgung mit dem Solarpanel gekoppelt sein. Die zum Betrieb des Videoboards benötigte elektrische Energie muss somit nicht von außen bereitgestellt werden, sondern kann durch die Solarzellen unmittelbar an dem Werbeträger selbst erzeugt werden.

Grundsätzlich ist es auch möglich, eine Werbewechseleinrichtung an der Verkleidungsvorrichtung vorzusehen. Durch eine Werbewechseleinrichtung kann eine angezeigte Information, ein Werbetext und/oder eine Werbegrafik periodisch gewechselt werden.

Weiterhin ist es bevorzugt, dass das Videoboard positionsvariabel an dem Träger angebracht ist. Hierzu kann das Videoboard beispielsweise an einer oder mehreren Schienen geführt oder an einem Führungsarm aufgehängt sein. Die von dem Solarpanel bereitgestellte elektrische Energie kann beispielsweise auch zur Bewegung des Videoboards verwendet werden.

In einer weiteren bevorzugten Ausgestaltung der Erfindung sind LED-Anzeigen vorhanden, welche zur Energieversorgung mit dem Solarpanel gekoppelt sind. LED-Anzeigen benötigen relativ wenig Energie und sind somit besonders geeignet, mittels Solarstrom betrieben zu werden.

Um die Bereitstellung der elektrischen Energie von Schwankungen des eingestrahlten Sonnenlichts möglichst zu entkoppeln, ist in einer bevorzugten Ausgestaltung eine Batterie zum Speichern der von dem Solarpanel erzeugten elektrischen Energie vorhanden. Die Batterie kann beispielsweise tagsüber mittels der Solarzellen geladen und nachts zur Versorgung der Beleuchtungseinrichtung, des Videoboards, der LED-Anzeigen oder anderer elektrischer Verbraucher verwendet werden.

Weiterhin ist es bevorzugt, dass ein Adapter zum Einspeisen der elektrischen Energie in ein Stromnetz eines Gebäudes vorhanden ist. Damit kann die von dem Solarpanel bereitgestellte elektrische Energie direkt in ein bestehendes Stromnetz eingespeist werden. Dies stellt eine besonders günstige Nutzung der solartechnisch erzeugten Energie dar.

Die Erfindung wird nachfolgend anhand eines in der beigefügten Zeichnung schematisch dargestellten Ausführungsbeispiels näher erläutert. In der Zeichnung zeigt:
- Fig. 1:: ein erstes Ausführungsbeispiel einer erfindungsgemäßen Verkleidungsvorrichtung und
- Fig. 2: ein zweites Ausführungsbeispiel einer erfindungsgemäßen Verkleidungsvorrichtung.

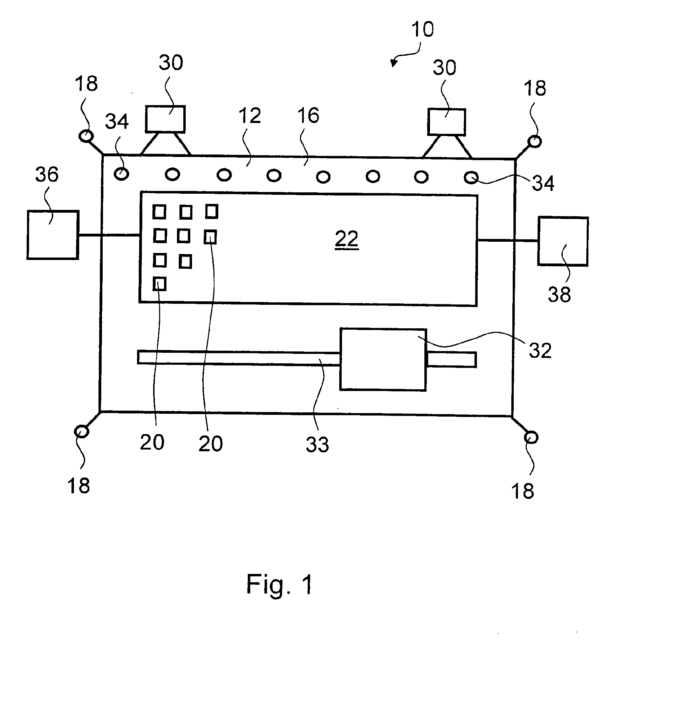

Mit Bezug auf Fig. 1 weist eine erfindungsgemäße Verkleidungsvorrichtung 10 einen flächigen, flexiblen Träger 12 auf. Hierbei kann es sich beispielsweise um ein Textilmaterial, ein Netz oder auch um eine robuste Folie handeln. Der Träger, insbesondere das Textil oder Netz, kann beschichtet sein.

Auf oder an dem Trägermaterial 12 ist eine Informations- oder Werbefläche 16 vorgesehen. Die Informations- oder Werbefläche 16 kann beispielsweise einen Aufdruck in Form einer Information, eines Werbetextes und/oder einer Werbegrafik enthalten. Die Verkleidungsvorrichtung 10 kann somit grundsätzlich auch als Werbeträger oder Werbeposter bezeichnet werden.

Um die Verkleidungsvorrichtung 10 an einer geeigneten Stelle, beispielsweise einem Trägergerüst oder einer Gebäudefassade, anzubringen, sind mehrere Befestigungseinrichtungen 18 vorgesehen. Die Befestigungseinrichtungen 18 weisen Ösen auf, die an einem Randbereich des Trägers 12 angeordnet sind. Alternativ oder zusätzlich hierzu können auch Befestigungslaschen vorgesehen sein. Die Ösen oder Laschen können mit entsprechenden Tragseilen in Eingriff gebracht werden.

Auf einer einem Betrachter zugewandten Vorderfläche des Trägers 12 ist eine Vielzahl von Solarzellen 20 an dem Träger 12 angebracht. Die Solarzellen 20 bilden ein Solarpanel 22, welches auch als Solarmodul, Solarkollektor oder Solaranlage bezeichnet werden kann. Alternativ zu der dargestellten Ausführungsform kann die Verkleidungsvorrichtung 10 auch mehrere Solarpanels 22 mit jeweils einer Vielzahl von Solarzellen 20 aufweisen.

Das Solarpanel 20 ist lösbar an dem Träger 12 angebracht und für einen temporären Einsatz an dem Träger vorgesehen.

Zum Anzeigen von bewegten und/oder beleuchteten Bildern ist ein Videoboard 32 vorhanden. Das Videoboard 32 ist entlang der Informations- oder Werbefläche 16 verschiebbar geführt. Hierzu ist eine Führungsschiene 33 vorgesehen.

An der Verkleidungsvorrichtung 10 sind mehrere LED-Anzeigen 34 vorgesehen. Zum Be- oder Hinterleuchten der Informations- oder Werbefläche 16 sind Beleuchtungseinrichtungen 30 vorhanden.

Weiterhin ist zum Speichern der von den Solarzellen 20 beziehungsweise dem Solarpanel 22 erzeugten elektrischen Energie ein Energiespeicher in Form einer Batterie 36 vorgesehen. Alternativ und/oder zusätzlich zu der Speicherung der elektrischen Energie in der Batterie 36 kann die elektrische Energie über einen Adapter 38 in ein bestehendes Stromnetz eingespeist werden.

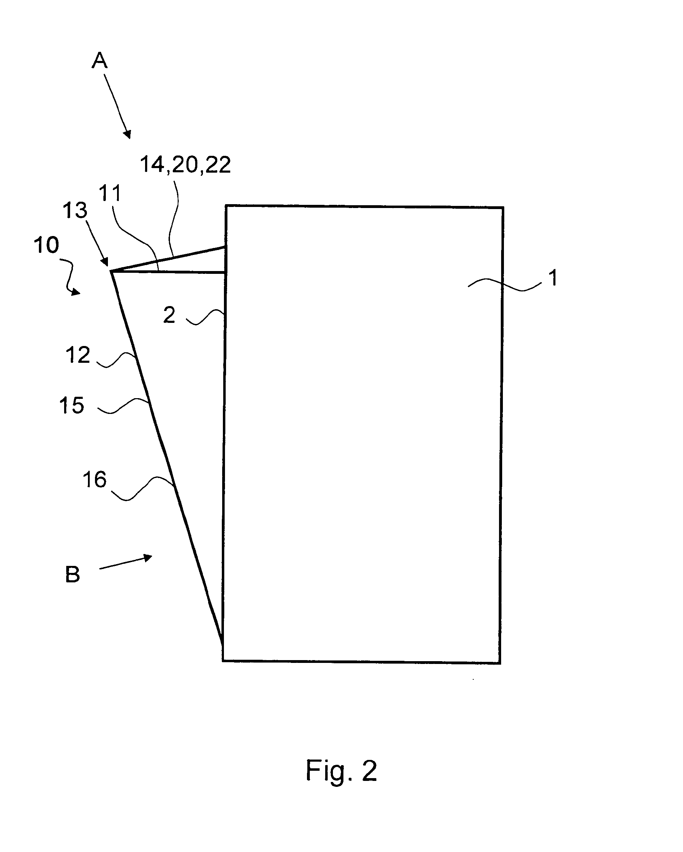

Fig. 2 zeigt eine weitere Ausführungsform einer erfindungsgemäßen Verkleidungsvorrichtung 10. Die Verkleidungsvorrichtung 10 ist an einer Gebäudefassade 2 eines Gebäudes 1 angebracht.

Die Verkleidungsvorrichtung 10 umfasst einen Träger 12 mit zwei ebenen Flächen 14, 15, die zueinander in einem Winkel angeordnet sind. Die beiden Flächen 14, 15 sind geneigt gegenüber der Gebäudefassade 2 und weisen entlang ihrer Oberflächen einen sich ändernden Abstand zu der Gebäudefassade 2 auf.

Zwischen einem Eckbereich 13 und der Gebäudefassade 2 ist ein Abstandshalter 11 angebracht. Der Abstandshalter 11 ist zwischen der ersten Fläche 14 und der zweiten Fläche 15 montiert und sorgt für eine Beabstandung des Eckbereichs 13 von der Gebäudefassade 2.

An der ersten Fläche 14 ist ein Solarpanel 22 mit mehreren Solarzellen 20 angeordnet. Die erste Fläche 14 mit dem Solarpanel 22 ist in der Montagestellung der Verkleidungsvorrichtung 10 nach oben in Richtung des Sonnenlichts ausgerichtet. Damit kann das Solarpanel 22 aus einer oberen schrägen Richtung, welche mit einem Pfeil A gekennzeichnet ist, in einem für die Stromgewinnung günstigen Winkel mit Sonnenlicht bestrahlt werden.

Die Informations- oder Werbefläche 16 ist an der zweiten Fläche 15 des Trägers 12 angeordnet. Die zweite Fläche 15 mit der Werbeinformation ist vertikal oder nach unten ausgerichtet. Die zweite Fläche 15 kann aus einer mit einem Pfeil B gekennzeichneten Blickrichtung eines Betrachters betrachtet werden.

Durch diese Ausführungsform kann die Ausrichtung der Solarzellen 20 oder des Solarpanels 22 auf einfache Weise verbessert werden. Damit kann ein verbesserter Wirkungsgrad des Solarmoduls 22 bei gleichzeitig günstigem Betrachtungswinkel der Werbefläche 16 erzielt werden.

## Patentansprüche

1. Verkleidungsvorrichtung zum Verkleiden eines Gerüstes oder einer Fassade
- mit einem flächigen, flexiblen Träger (12), welcher zum Verkleiden des Gerüstes oder der Fassade vor dem Gerüst oder der Fassade anordenbar ist, und
- mit einer Befestigungseinrichtung (18) zum lösbaren Befestigen des Trägers (12) an dem Gerüst oder der Fassade,
**dadurch gekennzeichnet,**
- **dass** zum Erzeugen von elektrischer Energie mindestens ein Solarpanel (22) mit einer Mehrzahl von Solarzellen (20) an dem Träger (12) angebracht ist,
- **dass** der Träger (12) zum mechanischen Stabilisieren und räumlichen Positionieren des Solarpanels (22) eingerichtet ist und
- **dass** der Träger (12) zum Aufnehmen von mechanischen Kräften, welche in einem Montagezustand in das Solarpanel (22) eingetragen werden, insbesondere von Windkräften, und zum Einleiten dieser Kräfte in das Gerüst oder die Fassade eingerichtet ist.

2. Verkleidungsvorrichtung nach Anspruch 1,
**dadurch gekennzeichnet,**
**dass** der Träger (12) ein Netz, insbesondere ein Schutznetz, ein Gewebe, eine Folie oder eine Leinwand ist.

3. Verkleidungsvorrichtung nach einem der Ansprüche 1 oder 2,
**dadurch gekennzeichnet,**
**dass** das Solarpanel (22) mit den Solarzellen (20) flexibel ist.

4. Verkleidungsvorrichtung nach einem der Ansprüche 1 bis 3,
**dadurch gekennzeichnet,**
**dass** das Solarpanel (22) lösbar an dem Träger (12) befestigt ist.

5. Verkleidungsvorrichtung nach einem der Ansprüche 1 bis 4,
**dadurch gekennzeichnet,**
**dass** eine Informations- oder Werbefläche (16) zum Anzeigen einer Information, eines Werbetextes und/oder einer Werbegraphik vorhanden ist.

6. Verkleidungsvorrichtung nach einem der Ansprüche 1 bis 5,
**dadurch gekennzeichnet,**
**dass** Oberflächen der Solarzellen (20) gegenüber einer Fläche des Trägers (12), insbesondere gegenüber der Informations- oder Werbefläche (16), geneigt sind.

7. Verkleidungsvorrichtung nach Anspruch 5,
**dadurch gekennzeichnet,**
**dass** der Träger (12) mindestens zwei Flächen (14, 15) aufweist, die zueinander geneigt sind, und
**dass** das Solarpanel (22) an einer ersten Fläche (14) und die Informations-oder Werbefläche (16) an einer zweiten Fläche (15) des Trägers (12) angeordnet ist.

8. Verkleidungsvorrichtung nach einem der Ansprüche 1 bis 7,
**dadurch gekennzeichnet,**
**dass** das Solarpanel (22) zumindest teilweise transparent ist.

9. Verkleidungsvorrichtung nach einem der Ansprüche 1 bis 8,
**dadurch gekennzeichnet,**
**dass** eine Beleuchtungseinrichtung (30) zum Be- oder Hinterleuchten des Trägers (12) vorhanden ist, welche zur Energieversorgung mit dem Solarpanel (22) gekoppelt ist.

10. Verkleidungsvorrichtung nach einem der Ansprüche 1 bis 9,
**dadurch gekennzeichnet,**
**dass** die Solarzellen (20) unterschiedliche Farben aufweisen.

11. Verkleidungsvorrichtung nach einem der Ansprüche 1 bis 10,
**dadurch gekennzeichnet,**
**dass** ein Videoboard (32) zum Anzeigen von bewegten oder unbewegten Bildern vorhanden ist, welches zur Energieversorgung mit dem Solarpanel (22) gekoppelt ist.

12. Verkleidungsvorrichtung nach Anspruch 11,
**dadurch gekennzeichnet,**
**dass** das Videoboard (32) positionsvariabel an dem Träger (12) angebracht ist.

13. Verkleidungsvorrichtung nach einem der Ansprüche 1 bis 12,
**dadurch gekennzeichnet,**
**dass** LED-Anzeigen (34) vorhanden sind, welche zur Energieversorgung mit dem Solarpanel (22) gekoppelt sind.

14. Verkleidungsvorrichtung nach einem der Ansprüche 1 bis 13,
**dadurch gekennzeichnet,**
**dass** eine Batterie (36) zum Speichern der von dem Solarpanel (22) erzeugten elektrischen Energie vorhanden ist.

15. Verkleidungsvorrichtung nach einem der Ansprüche 1 bis 14,
**dadurch gekennzeichnet,**
**dass** ein Adapter (38) zum Einspeisen der elektrischen Energie in ein Stromnetz eines Gebäudes vorhanden ist.
